# EUROPÄISCHE PATENTSCHRIFT

(11) **EP 0 942 208 B1**
(45) Veröffentlichungstag und Bekanntmachung des Hinweises auf die Patenterteilung: **20.10.2004**
(21) Anmeldenummer: 99102002.5
(22) Anmeldetag: 01.02.1999
(51) Int. Cl.: F16J 15/32

(54) **Dichtungsbausatz**
Sealing assembly
Dispositif d'étanchéité

(30) Priorität: 09.03.1998 DE 19810113
(43) Veröffentlichungstag der Anmeldung: 15.09.1999
(73) Patentinhaber: Carl Freudenberg KG, 69469 Weinheim (DE)
(72) Erfinder: Fougerolle, Fabrice, 52600 Montlandon (FR)

(56) Entgegenhaltungen:
- DE-A- 3 838 760
- DE-C- 4 141 320
- DE-C- 4 224 995
- GB-A- 2 133 840

## Beschreibung

### Technisches Gebiet

Die Erfindung betrifft einen Dichtungsbausatz.

### Stand der Technik

Es ist bereits ein Dichtungsbausatz bekennt, bei dem die aus PTFE bestehende Dichtlippe eines Dichtrings während der Lagerung und des Transports durch eine in den Innenumfang eingefügte, zylindrische Hülse abgestützt ist, um zu verhindern, daß sich die Dichtlippe zurückverformt und unter Verminderung des Innendurchmessers ihre herstellungsbedingt ebene Gestalt vor der Montage wieder annimmt, weil sich daraus Probleme bei der Montage ergeben können. Die Neigung zu einer so extremen Rückverformung beruht auf dem sogenannten Memory-Effekt, der insbesondere PTFE-Werkstoffen zu eigen ist. Vor der eigentlichen Montage werden die bekannten Dichtringe von der Hülse abgenommen und unabhängig von dieser montiert. Dabei muß die aus polymerem Werkstoff bestehende Dichtlippe zumeist über ein mehr oder weniger scharfkantig begrenztes Ende der abzudichtenden Welle oder Stange hinweggeschoben werden, was häufig zu einer Beschädigung der Dichtlippe führt und als Folge davon zum vorzeitigen Ausfall des Dichtrings. Die Haftungsfrage ist in solchen Fällen meistens schwierig aufzuklären.

Aus der DE 41 41 320 C1 ist ein Dichtungsbausatz bekannt, der als Transportund Montagehülse für Wellendichtringe ausgebildet ist, umfassend einen Dichtring, der innenseitig durch eine Primärlippe und eine Sekundärlippe aus polymerem Werkstoff begrenzt ist, die zumindest während der bestimmungsgemäßen Verwendung eine entgegengesetzte Neigungsrichtung haben, wobei eine in die Primärlippe eingeführte Hülse an einem Ende eine winkelförmige, nach innen offene Ausnehmung aufweist, die auf den Außenumfang einer Welle oder Stange aufstülpbar ist und wobei an dem anderen Ende der Hülse eine Scheibe unlösbar festgelegt ist, die die Primärlippe zumindest teilweise in radialer Richtung übergreift.

### Darstellung der Erfindung

Der Erfindung liegt die Aufgabe zugrunde, einen Bausatz der zuvor genannten Art zu zeigen, bei dem ein gewaltsames Entfernen der Scheibe von der Hülse, also eine unsachgemäße Verwendung, signalisiert wird.

Diese Aufgabe wird erfindungsgemäß mit einem Dichtungsbausatz gelöst, bei dem die Scheibe an drei in Umfangsrichtung verteilten Stellen mit säulenförmigen Vorsprüngen versehen ist, die in entsprechende Bohrungen des Bundes der Hülse einfügbar sind und bei dem die Vorsprünge auf der der Stirnfläche zugewandten Seite des Bundes pilzkopfartig verschmolzen sind.

Die Erfindung nutzt die Tatsache, daß die hohlkegelig ausgebildete Primär- und Sekundärdichtlippe des Dichtrings zumindest während der bestimmungsgemäßen Verwendung axial in entgegengesetzter Richtung vorstehen, was es ausschließt, daß ein solcher Dichtring nach einem vorausgegangenen Abnehmen von der Hülse in rückwärtiger Richtung über deren vorderes Ende hinweg geführt und erneut auf der Hülse plaziert werden kann. Zur Gewährleistung einer ordnungsgemäßen Montage genügt daher die Vorschrift, den Dichtring ausgehend von der Hülse unmittelbar auf die Welle oder Stange aufzuschieben und in dem abzudichtenden Spalt zu plazieren. Dabei muß das Ende der Welle oder Stange in die Ausnehmung der Hülse eingefügt sein, was es ausschließt, daß die Dichtlippe andere Gegenstände als die Oberflächen der Hülse und der Welle oder Stange berührt. Eine unvorhersehbare Beschädigung ist dadurch völlig ausgeschlossen. Im Anschluß an die Montage des Dichtrings kann die Hülse mit der unlösbar daran festgelegten Scheibe entfernt und gegebenenfalls dem Dichtungshersteller zurückgegeben werden.

Dadurch, daß die Scheibe an drei in Umfangsrichtung verteilten Stellen mit säulenförmigen Vorsprüngen versehen ist, die in entsprechende Bohrungen des Bundes der Hülse einfügbar sind und auf der der Stimfläche zugewandten Seite des Bundes pilzkopfartig verschmolzen sind, führt eine gewaltsame Entfernung der Scheibe von der Hülse zum Abbrechen der Vorsprünge, was dem Dichtungshersteller signalisiert, daß der Dichtungsbausatz in unsachgemäßer Weise verwendet worden ist. Für die Klärung der Haftungsfrage bei Reklamationsfällen kann das von großem Vorteil sein.

Als vorteilhaft hat es sich bewährt, wenn die Hülse an dem zweiten Ende einen reduzierten Außendurchmesser hat, in dem zumindest eine Sekundärlippe mit dem Bereich des Innendurchmessers aufgenommen ist. Falls mehrere Sekundärlippen vorgesehen sind, besteht dabei die Möglichkeit, sie abweichend voneinander auszubilden und zu gestalten und beispielsweise auf eine äußere Sekundärlippe aus Filz in Richtung des abzudichtenden Raumes folgend eine Sekundärlippe aus Gummi folgen zu lassen, während die Primärlippe aus PTFE oder Gummi besteht. Insbesondere in Bezug auf die Abdichtung der Kurbelwellen von Verbrennungskraftmaschinen hat sich eine solche Ausbildung ausgezeichnet bewährt.

Die Hülse und/oder Scheibe kann aus Kunststoff bestehen. In Hinblick auf die großen mechanischen Belastungen, die sich bei einer automatischen Montage ergeben, hat es sich als vorteilhaft bewährt, wenn die Hülse durch einen Tiefziehprozeß aus Blech erzeugt ist.

Die Scheibe und die Hülse können einstückig ineinander übergehend ausgebildet sein, beispielsweise bei einer Ausführung, die aus Kunststoff besteht.

Nach einem anderen Vorschlag ist es vorgesehen, daß die Scheibe separat erzeugt und nach dem Auffügen des Dichtrings auf die Hülse mit dieser verbunden ist. Dazu kann die Scheibe aus Kunststoff bestehen und beispielsweise durch eine Schmelzverklebung mit der Hülse verbunden sein. Es besteht des weiteren die Möglichkeit, die Scheibe und die Hülse durch eine Nietverbindung aneinander festzulegen. Weitere Methoden und Möglichkeiten zur Herstellung einer unlösbaren Verbindung zwischen der Scheibe und der Hülse sind dem Fachmann vertraut. Ihre Anwendung ist wichtig, um die Dichtlippen vor ihrer Überführung auf die abzudichtende Welle oder Stange für sekundäre Einwirkungen und insbesondere Beschädigungen unzugänglich zu machen.

Als zweckmäßig hat es sich bewährt, wenn die Scheibe und/oder die Hülse einen radial nach innen weisenden Bund aufweist, der die Stirnfläche der Welle oder Stange zumindest teilweise übergreift. Ein solcher Bund kann von einer zentralen oder mehreren gleichmäßig in Umfangsrichtung verteilten Bohrungen durchdrungen sein, durch die sich die Hülse vorübergehend an dem Ende der abzudichtenden Welle oder Stange festlegen läßt, um Relativverlagerungen und insbesondere Winkelverlagerungen während der Montage des Dichtringes auszuschließen. Für die Gewährleistung eines guten Abdichtungsergebnisses ist das von großem Vorteil.

### Kurzbeschreibung der Zeichnungen

Es zeigen:
- Figur 1:: einen beispielhaften Dichtungsbausatz in halbgeschnittener Darstellung,
- Figur 2:: den in Figur 1 gezeigten Bausatz in einer Ansicht von vom.

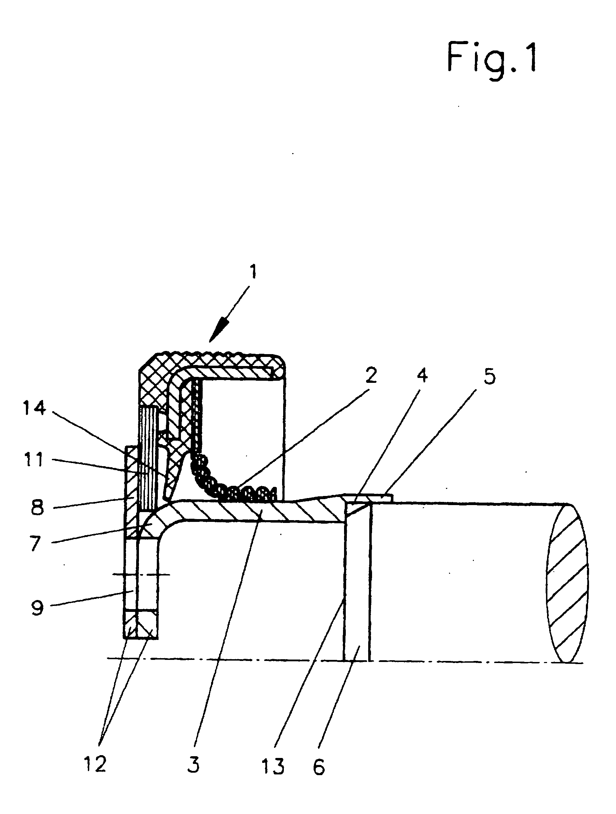

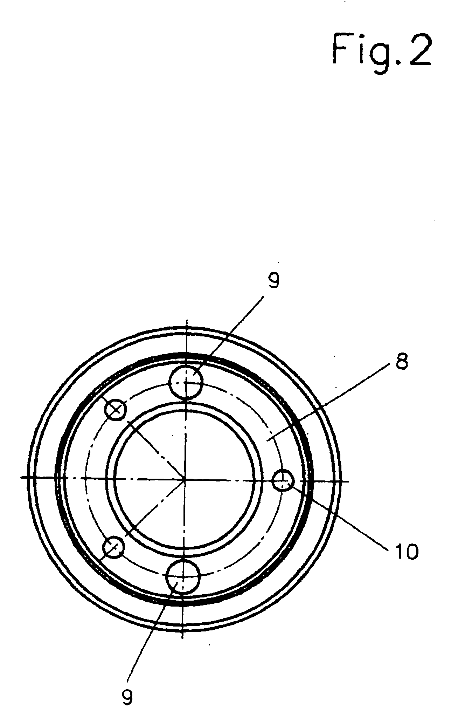

Der in den Figuren 1 und 2 gezeigte Dichtungsbausatz umfaßt einen Dichtring üblicher Bauart, der beispielsweise bei der Anwendung einer Kurbelwelle zur Anwendung gelangen kann. Der Dichtring besteht aus einem Verstärkungsring aus Blech, der in einen Gummiring einvulkanisiert ist und in radialer Richtung nach innen vorstehend eine Staublippe 11 aufweist, die aus Filz besteht, eine Sekundärlippe 14, die aus Gummi besteht und eine Primärlippe 2, die aus PTFE besteht, wobei letztere herstellungsbedingt von kreisringförmiger Gestalt und im Bereich des Innenumfanges in Richtung des abzudichtenden Raumes trompetenartig vorgewölbt ist. Um der auf diese Weise erzeugten Primärlippe im Bereich des Innenumfangs eine hinreichende Flexibilität zu geben, ist die sie bildende Scheibe im Bereich der einander gegenüberliegenden Oberflächen mit spiralig verlaufenden Nuten versehen, die einander auf Lücke zugeordnet sind. Die Nuten können durch einen schneidenden, jedoch gegebenenfalls auch durch einen Prägeprozeß bei erhöhter Temperatur erzeugt sein. Sie bewirken neben der Erhöhung der Flexibilität der Primärlippe eine Rückförderung von den Dichtspalt passierender Leckflüssigkeit in den abzudichtenden Raum.

Die Hülse 3 besteht aus Blech und ist durch einen Tiefziehprozeß erzeugt. Ihr erstes Ende 5 ist mit einer winkelförmig nach innen offenen Ausnehmung 4 versehen, die im Bereich des Endes auf den Außenumfang der abzudichtenden Welle oder Stange 6 aufstülpbar ist. Das erste Ende ist frei von scharfen Kanten, die eine Verletzung der Dichtlippe bewirken könnten.

Das zweite Ende 7 hat einen sich abgerundet nach innen vermindernden Außendurchmesser, der so dimensioniert ist, daß die aus Filz bestehende, kreisringförmig gestaltete Staublippe 11 mit einem Innendurchmesser, der kleiner ist als der Außendurchmesser der abzudichtenden Welle, unter Vermeidung von Verformung aufgenommen werden kann.

Der Innendurchmesser der Sekundärlippe 14 ist kleiner als der Außendurchmesser der abzudichtenden Welle oder Stange 6. Die Sekundärlippe ist hohlkegelig ausgebildet. Sie hat, bezogen auf die Primärlippe, eine entgegengesetzte Neigungsrichtung.

In axialer Richtung ist die Hülse 3 im Bereich ihres zweiten Endes unlösbar mit einer kreisringförmig ausgebildeten, im wesentlichen ebenen Scheibe 8 verbunden, wobei die Scheibe 8 und die Hülse 3 in diesem Bereich einen radial nach innen weisenden Bund 12 aufweisen, der die Stirnfläche der abzudichtenden Welle oder Stange 6 teilweise übergreift. Der Bund 12 der Scheibe 8 und Hülse 3 sind an zwei einander gegenüberliegenden Stellen von Bohrungen 9 durchdrungen, durch die der Bausatz während der Montage unverrückbar mit dem Ende der abzudichtenden Welle oder Stange 6 verschraubt werden kann. Im Anschluß daran ist es möglich, den Dichtring 1 über das erste Ende 5 der Hülse 3 hinweg unmittelbar auf den Außenumfang der abzudichtenden Welle oder Stange 6 aufzuschieben und in dem abzudichtenden Spalt zu plazieren, ohne daß die Gefahr des Auftretens von Verkantungen entsteht. Im Anschluß daran kann die mit der Scheibe 8 eine unlösbar Einheit bildende Hülse 3 entfernt und gegebenenfalls an den Dichtungshersteller zurückgegeben werden.

Die Scheibe 8 ist an drei in Umfangsrichtung verteilten Stellen 10 mit säulenförmigen Vorsprüngen versehen, die in entsprechende Bohrungen des Bundes 12 der Hülse 3 einfügbar und auf der der Stirnfläche 13 zugewandten Seite des Bundes 12 pilzkopfartig verschmolzen sind. Eine gewaltsame Entfernung der Scheibe 8 von der Hülse 3 führt zum Abbrechen der Vorsprünge, was dem Dichtungshersteller signalisiert, daß der Dichtungsbausatz in unsachgemäßer Weise verwendet worden ist. Für die Klärung der Haftungsfrage bei Reklamationsfällen kann das von großem Vorteil sein.

## Patentansprüche

1. Dichtungsbausatz, umfassend einen Dichtring (1), der innenseitig durch zumindest eine zumindest in einem Teilbereich hohlkegelige Primärlippe (2) und Sekundärlippe (14) aus polymerem Werkstoff begrenzt ist, die zumindest während der bestimmungsgemäßen Verwendung eine entgegengesetzte Neigungsrichtung haben, eine zumindest in die Primärlippe (2) eingeführte Hülse (3) mit einer winkelförmig nach innen offenen Ausnehmung (4) an dem ersten Ende (5), die mit der Ausnehmung (4) auf den Außenumfang einer Welle oder Stange (6) aufstülpbar ist und eine an dem zweiten Ende (7) der Hülse (3) unlösbar festgelegte Scheibe (8), die die Primärlippe (2) zumindest teilweise in radialer Richtung übergreift, **dadurch gekennzeichnet, dass** die Scheibe (8) an drei in Umfangsrichtung verteilten Stellen mit säulenförmigen Vorsprüngen (10) versehen ist, die in entsprechende Bohrungen des Bundes (12) der Hülse (3) einfügbar sind und dass die Vorsprünge (10) auf der der Stirnfläche (13) zugewandten Seite des Bundes (12) pilzkopfartig verschmolzen sind.

2. Dichtungsbausatz nach Anspruch 1, **dadurch gekennzeichnet, daß** die Hülse (3) an dem zweiten Ende (7) einen reduzierten Außendurchmesser hat, in den eine Schutzlippe (11) einfügbar ist.

3. Dichtungsbausatz nach Anspruch 1 oder 2, **dadurch gekennzeichnet, daß** die Hülse (3) durch einen Tiefziehprozeß erzeugt ist.

4. Dichtungsbausatz nach einem der Ansprüche 1 bis 3, **dadurch gekennzeichnet, daß** die Scheibe (8) und die Hülse (3) einstückig ineinander übergehend ausgebildet sind.

5. Dichtungsbausatz nach einem der Ansprüche 1 bis 3, **dadurch gekennzeichnet, daß** die Scheibe (8) separat erzeugt und nach dem Auffügen des Dichtrings (1) auf die Hülse (3) mit dieser verbunden ist.

6. Dichtungsbausatz nach einem der Ansprüche 1 bis 5, **dadurch gekennzeichnet, daß** die Scheibe (8) und/oder die Hülse (3) an dem zweiten Ende (7) einen radial nach innen weisenden Bund (12) aufweist, der die Stirnfläche der Welle oder Stange (6) zumindest teilweise übergreift.

7. Dichtungsbausatz nach einem der Ansprüche 1 bis 6, **dadurch gekennzeichnet, daß** zumindest die Scheibe (8) aus Kunststoff besteht.

## Claims

1. A sealing assembly, comprising a sealing ring (1), which is bounded on the inside by at least one at least partly hollow-conical primary lip (2) and a secondary lip (14) of polymeric material, which are angled in different directions, at least during use as intended, also comprising a sleeve (3) inserted at least into the primary lip (2) and having at the first end (5) an aperture (4) which is open angularly inwards, which sleeve can be fitted with the aperture (4) onto the outer circumference of a shaft or rod (6), and comprising a washer (8), which is undetachably fixed to the second end (7) of the sleeve (3) and reaches at least partly over the primary lip (2) in the radial direction, **characterized in that** the washer (8) is provided at three circumferentially distributed points with columnar projections (10), which can be inserted into corresponding bores on the collar (12) of the sleeve (3) and **in that** the projections (10) are fused in the manner of mushroom heads on the side of the collar (12) that is facing the extreme end (13).

2. A sealing assembly according to claim 1, **characterized in that** the sleeve (3) has at the second end (7) a reduced outside diameter, into which a protective lip (11) can be inserted.

3. A sealing assembly according to either of claims 1 and 2, **characterized in that** the sleeve (3) is produced by a thermoforming process.

4. A sealing assembly according to any one of claims 1 to 3, **characterized in that** the washer (8) and the sleeve (3) are formed in one piece with each other.

5. A sealing assembly according to any one of claims 1 to 3, **characterized in that** the washer (8) is separately produced and is connected to the sleeve (3) after the sealing ring (1) has been fitted onto the said sleeve.

6. A sealing assembly according to any one of claims 1 to 5, **characterized in that** the washer (8) and/or the sleeve (3) has at the second end (7) a radially inwardly facing collar (12), which at least partly reaches over the extreme end of the shaft or rod (6).

7. A sealing assembly according to any one of claims 1 to 6, **characterized in that** at least the washer (8) consists of plastics material.

## Revendications

1. Dispositif d'étanchéité, comprenant un anneau d'étanchéité (1) qui est limité du côté intérieur par au moins une lèvre primaire (2) cannelée au moins dans une zone partielle et une lèvre secondaire (14) en matière polymère qui, au moins pendant l'utilisation en conformité avec leur spécification, ont un sens d'inclinaison opposé, un manchon (3) introduit au moins dans la lèvre primaire (2) avec un évidement (4) ouvert vers l'intérieur de façon angulaire sur la première extrémité (5), qui peut être mis avec l'évidement (4) sur la circonférence extérieure d'un arbre ou d'une barre (6) et un disque (8) fixé de façon indétachable sur la deuxième extrémité (7) du manchon (3), qui chevauche la lèvre primaire (2) au moins partiellement dans le sens radial, **caractérisé en ce que** le disque (8) est doté, sur trois endroits répartis dans le sens circonférentiel, de parties en saillie (10) en forme de colonne qui peuvent être introduites dans les alésages correspondants de la collerette (12) du manchon (3) et **en ce que** les parties en saillie (10) sont soudées ensemble à la manière d'une tête de champignon sur le côté orienté vers la surface frontale (13) de la collerette (12).

2. Dispositif d'étanchéité selon la revendication 1, **caractérisé en ce que** le manchon (3) sur la deuxième extrémité (7) a un diamètre extérieur réduit dans lequel peut être introduite une lèvre de protection (11).

3. Dispositif d'étanchéité selon la revendication 1 ou 2, **caractérisé en ce que** le manchon (3) est fabriqué par un processus d'emboutissage profond.

4. Dispositif d'étanchéité selon l'une des revendications 1 à 3, **caractérisé en ce que** le disque (8) et le manchon (3) sont conçus en se fondant l'un dans l'autre pour ne former qu'une seule pièce.

5. Dispositif d'étanchéité selon l'une des revendications 1 à 3, **caractérisé en ce que** le disque (8) est fabriqué séparément et après l'assemblage de l'anneau d'étanchéité (1) sur le manchon (3) est relié à celui-ci.

6. Dispositif d'étanchéité selon l'une des revendications 1 à 5, **caractérisé en ce que** le disque (8) et/ou le manchon (3) présente sur la deuxième extrémité (7) une collerette (12) se dirigeant radialement vers l'intérieur qui chevauche au moins partiellement la surface frontale de l'arbre ou de la barre (6).

7. Dispositif d'étanchéité selon l'une des revendications 1 à 6, **caractérisé en ce qu'** au moins le disque (8) se compose de matière synthétique.
